# EUROPEAN PATENT APPLICATION

(11) **EP 4 691 844 A1**
(43) Date of publication of application: **11.02.2026**
(21) Application number: 25193713.2
(22) Date of filing: 04.08.2025
(51) Int. Cl.: B60N 2/02, B60N 2/18

(54) **A SEAT ADJUSTMENT DEVICE**

(30) Priority: 05.08.2024 US 202463679240 P
(71) Applicant: Adient US LLC, Plymouth, MI 48170 (US)
(72) Inventor: NOFFZ, Karl Emil, Waterford (MI), 48327 (US); BREWER, William Shawn, Plymouth (MI), 48170 (US)
(74) Representative: Liedtke & Partner Patentanwälte

(57) **Abstract**

A seat adjustment device (10, 570) may have a first lead screw (30, 640), a second lead screw (80, 650), and a connector (70, 660). A first portion of the connector (70, 660) may comprise threads that may be adapted to receive threads from the first lead screw (30, 640). A second portion of the connector (70, 660) may comprise threads that are adapted to receive threads from the second lead screw (80, 650).

## Description

### FIELD

A device that relates to a seat adjustment device is depicted and described.

### BACKGROUND

Automotive companies have been adding "zero-gravity" adjustment features to their vehicles. One of the means to achieve the "zero-gravity" feature is to manufacture the front link of the seat lift system as a four-bar linkage with a changeable length. Conventional spindle drives can achieve this but they are difficult to package and are unlikely to provide high-strength attachments to the seat structure at the front link location.

In view of the disadvantages associated with prior art designs, it would be advantageous for a "zero-gravity" seat adjustment feature to have a design that ensures a high-strength attachment to the seat structure and easy to package. The present disclosure is a turnbuckle style spindle drive front link adjusting actuator that provides an improved package and structural attachment to the seat frame.

### SUMMARY

An adjustment device for a vehicle seat may have a first lead screw, a second lead screw, and a connector. The connector may have a first portion that has threads that may be configured to receive threads from the first lead screw. The connector may have a second portion that comprises threads that may be configured to receive threads from the second lead screw.

The threads on the first portion of the connector and the threads on the second portion of the connector may be oriented in a different direction than one another such that the connector and the first lead screw may be configured to simultaneously move away from the second lead screw.

The threads on the first lead screw and the threads on the second lead screw may be oriented in a different direction than one another such that rotation of the connector may force the connector to move away from or towards the second lead screw; and the first lead screw away from or towards the connector and the second lead screw.

The connector may be configured to rotate relative to the first lead screw and the second lead screw.

The threads of the connector may be configured such that rotation of the connector may drive translation of the first lead screw and the connector relative to the second lead screw.

The adjustment device may have a motor, a drive shaft, a worm gear, and a drive gear, and the drive gear may be directly connected to the connector and may be connected to the motor through the worm gear and drive shaft, such that the motor may rotate the connector.

The first lead screw and the second lead screw may be longitudinally aligned about a common rotational axis.

In a first extended position, the first lead screw and the second lead screw may be distal from one another along a longitudinal axis.

The first lead screw may have a feature that may allow the adjustment device to attach to the seat cushion, and the second lead screw may have a feature that may allow the adjustment device to attach to a seat base.

A distance between the feature of the first lead screw and the feature of the second lead screw may be increased by rotation of the connector.

A threaded portion of the first lead screw may comprise threads that may be oriented in a different direction than threads on a threaded portion of the second lead screw.

A seat may comprise a seat cushion, a base, and an adjustment device, and the adjustment device may be directly connected to the cushion and the base such that the adjustment device may be configured to move the cushion relative to the base.

The connector may have a connecting screw, threads on the second lead screw may be configured to receive threads on an outer portion of the connecting screw, and threads on an inner portion of the connecting screw may be configured to receive the threads on the first lead screw.

The adjustment device may have a drive gear and the drive gear may be coupled to a non-threaded portion of the connecting screw.

In a compact position, a first end of the first lead screw may be in direct contact with a stop portion of the second lead screw.

The drive gear may have a threaded portion that may be configured to receive a threaded portion of the worm gear.

The connector may be hollow and may comprise a threaded inner diameter. The threaded inner diameter may be configured to receive a threaded portion of the first lead screw and a threaded portion of the second lead screw.

A stop portion of the first lead screw and a stop portion of the second lead screw may each have a larger outer diameter than the threaded portion of the first lead screw and the second lead screw and may each be configured to make selective contact with opposite end portions of the connector.

The drive gear may have an inner diameter that may be directly connected to an outer diameter of the connector.

The adjustment device may have a worm gear with threads that may be configured to interact with threads on a drive gear such that rotation of the worm gear may rotate the drive gear.

### BRIEF DESCRIPTION OF THE DRAWINGS

Fig. 1 is a perspective view of a vehicle;
Fig. 2 is a top view of a vehicle with vehicle seats;
Fig. 3 is a perspective view of a vehicle seat;
Fig. 4 is an exploded view of a portion of a seat adjustment device;
Fig. 5 is a perspective view of a seat adjustment device;
Fig. 6 is a perspective view of a possible application of a seat adjustment device in a compact position;
Fig. 7 is a cut-away side view of a portion of a seat adjustment device in a compact position;
Fig. 8 is a cut-away side view of a portion of a seat adjustment device in a partially extended position;
Fig. 9 is a cut-away side view of a portion of a seat adjustment device in a fully extended position with a stop mechanism;
Fig. 10 is a perspective view of a possible application of the seat adjustment device in a fully extended position;
Fig. 11 is an exploded view of a portion of a seat adjustment device;
Fig. 12 is a cut-away side view of a portion of a possible application of a seat adjustment device in a compact position;
Fig. 13 is a cut-away side view of a possible application of a portion of a seat adjustment device in an extended position;
Fig. 14 is a perspective view of a possible application of a seat adjustment device in a vehicle seat in a compact position;
Fig. 15 is a perspective view of a possible application of a seat adjustment mechanism in a vehicle seat in a fully extended position;

### DETAILED DESCRIPTION OF THE PREFERRED EMBODIMENTS

It is to be understood that the presently disclosed subject matter may assume various alternative orientations and step sequences, except where expressly specified to the contrary. It is also to be understood that the presently disclosed subject matter described in the following specification is simply an exemplary aspect. Hence, specific dimensions, directions or other physical characteristics relating to the aspects disclosed are not to be considered as limiting, unless expressly stated otherwise.

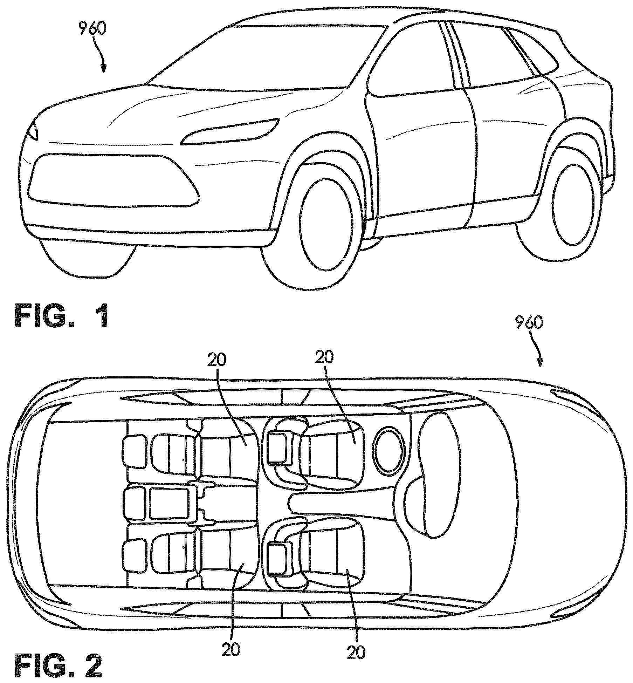

As schematically depicted in Figs. 1-3, a vehicle 960 may comprise at least one vehicle seat 20. The vehicle seat 20 may comprise a seat back 405 and a seat cushion 400. The seat cushion may be in direct facing contact with seat cushion frame 490. The seat cushion 400 may have a front end 460 that is directly above a vehicle seat base 200. The seat cushion 400 may be adjusted at the front end 460 by an adjustment device 10, 570.

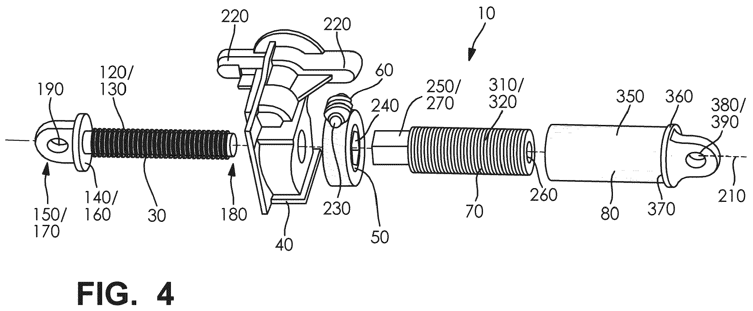

As schematically depicted in Figs. 4-5, the adjustment device 10 may comprise a first lead screw 30, a gear housing unit 40, a drive gear 50, a worm gear 60, a connector 70, also known as a connecting screw 70, and a second lead screw 80. To adjust the at least one vehicle seat 20, it may be desired to employ multiple of these devices 10. In such a case, a motor housing unit 110 may connect the devices 10 to one another, allowing for simultaneous operation of the devices 10. The motor housing unit 110 may at least partially enclose a motor 90 and a drive shaft 100.

Turning now to Fig. 4, the first lead screw 30 may comprise a threaded portion 120 on an outer surface of the first lead screw 30, a stop portion 140 with a bottom surface 160 at a first end portion 150, and a connector portion 170 also at the first end portion 150. The first lead screw 30 may also have a second end portion 180 opposite the first end portion 150. The threaded portion 120 may have an outer diameter of between approximately 6mm and approximately 18mm. The stop portion 140 may have a larger outer diameter than the outer diameter of the threaded portion 120 to stop the first lead screw 30 from longitudinally over-extending. The connector portion 170 may have a hole 190 in its center to allow for a connection to a seat base 200. By way of example, the connection may be achieved via screws, nails, pegs, bolts, rivets, adhesives, dowels, and/or welding. The first lead screw 30 may also be oriented along a longitudinal axis 210.

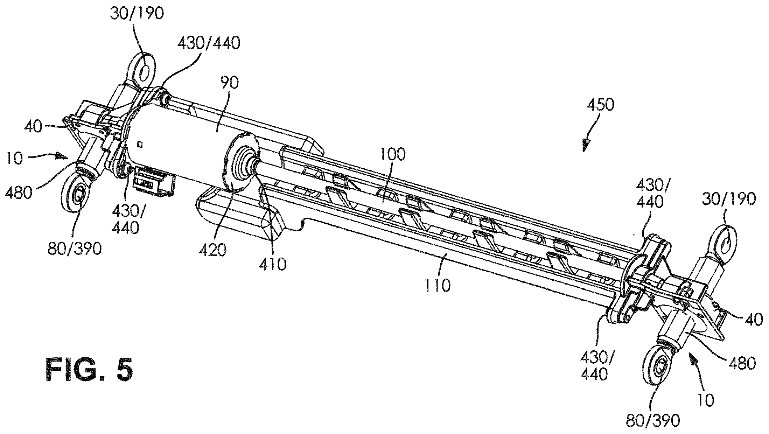

As may be appreciated from Figs. 4 and 5, the gear housing unit 40 may house at least a portion of the worm gear 60 and at least a portion of the drive gear 50. The gear housing unit 40 may house the entirety of the worm gear 60 and the entirety of the drive gear 50. The gear housing unit 40 may comprise two connector portions 220 that may be adapted to attach directly to a motor housing unit 110. The connector portions 220 of the gear housing unit 40 may be coplanar and laterally distal one another. The connector portions 220 of the gear housing unit 40 may be attached to the motor housing unit 110 in any way that prevents rotation of the gear housing unit 40 relative to the motor housing unit 110. By way of example, the connector portions 220 of the gear housing unit 40 may be attached to the motor housing unit 110 via screws, nails, bolts, rivets, adhesives, pegs, dowels, and/or welding.

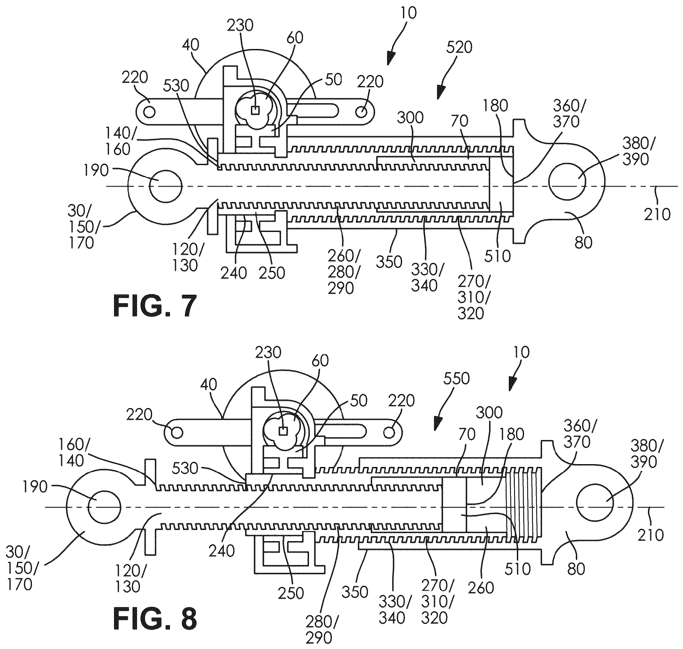

As schematically depicted in Fig. 7, the worm gear 60 may be oriented on the drive gear 50 in such a way that allows rotational motion of the worm gear 60 about an axis that is perpendicular to the longitudinal axis 210 to convert to rotational motion of the drive gear 50 about the longitudinal axis 210. The worm gear 60 may be cylindrical with a cut-out center portion 230 that is adapted to receive the drive shaft 100. The shape of the cut-out center portion 230 may be any that will provide a tight-fitting connection with the drive shaft 100. The drive shaft 100 may be welded to the center portion 230 of the worm gear 60, thus obviating the need for a cut out portion or particular shape.

As schematically depicted in Fig. 4, the drive gear 50 may have an unthreaded inner portion 240 that is shaped to receive an unthreaded outer portion 250 of the connector 70. The shape of the inner portion 240 of the drive gear 50 may be of any necessary to fit the needs of the application, but by way of example, the shape of the inner portion 240 of the drive gear 50 may be hexagonal to receive an unthreaded outer portion 250 of the connector 70 with a hexagonal cross section.

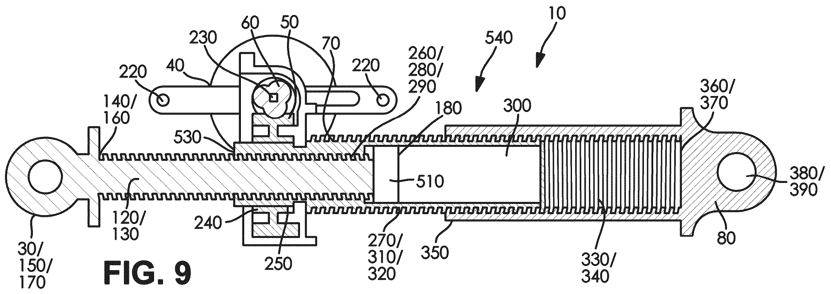

As schematically depicted in Figs. 7-9, the connector 70 may comprise an inner portion 260 and an outer portion 270. The inner portion 260 may be threaded for at least a portion of its length. By way of example, a threaded portion 280 of the inner portion 260 of the connector 70 may extend for the entirety of the length of the inner portion 260. The threads 290 on the inner portion 260 of the connector 70 may be adapted to engage with the threads 130 on the first lead screw 30. The inner portion 260 of the connector 70 may have a larger diameter than the outer diameter of the threaded portion 120 of the first lead screw 30 so that the first lead screw 30 can thread into and out of the connector 70. As schematically depicted in Fig. 9, the threaded portion 280 of the inner portion 260 of the connector 70 may comprise only a portion of the inner portion 260. In such a case, the inner portion 260 of the connector 70 may also comprise a non-threaded portion 300. The threaded portion 280 of the inner portion 260 and the non-threaded portion 300 of the inner portion 260 may be located within the connector 70 in any desired orientation, but by way of example, the threaded portion 280 of the inner portion 260 of the connector 70 may be closer to the connector portion 170 of the first lead screw 30 than the non-threaded portion 300 of the inner portion 260. The threaded portion 280 of the inner portion 260 of the connector 70 may have a smaller diameter than the non-threaded portion 300 of the inner portion 260.

As schematically depicted in Figs. 4, and 7-9, the outer portion 270 of the connector 70 may have a threaded portion 310 and an unthreaded portion 250. The unthreaded portion 250 may be at least as wide as the drive gear 50 is wide. The unthreaded portion 250 may have a cross section with a shape that matches the shape of the inner portion 240 of the drive gear 50. By way of example, this shape may be hexagonal. The threaded portion 310 of the outer portion 270 of the connector 70 may have a larger outer diameter than the diameter of the inner portion 240 of the drive gear 50 to prevent the threaded portion 310 of the outer portion 270 of the connector 70 from slipping through the drive gear 50. The threads 290 on the threaded portion 280 of the inner portion 260 of the connector 70 may be opposite the threads 320 on the outer portion 310 of the connector 70. For example, if the threads 320 on the outer portion 310 of the connector 70 are right-handed threads 320, the threads 290 on the inner portion 260 of the connector 70 may be left-handed threads 290.

As schematically depicted in Figs. 7-9, the threaded portion 310 of the outer portion 270 of the connector 70 may be adapted to engage with a threaded inner portion 330 of the second lead screw 80. The second lead screw 80 may comprise the threaded inner portion 330, a smooth, unthreaded outer portion 350, a stop portion 360 with a bottom surface 370, and a connector portion 380. The threaded inner portion 330 may comprise threads 340 that are oriented opposite of the threads 290 of the threaded portion 280 of the inner portion 260 of the connector 70. By way of example, if the threads 290 on the inner portion 260 of the connector 70 are left-handed threads, the threads 290 on the inner portion 330 of the second lead screw 80 may be right-handed threads. The diameter of the inner portion 330 of the second lead screw 80 may be larger than the outer diameter of the connector 70 to allow the threaded outer portion 310 of the connector 70 to engage with the threaded inner portion 330 of the second lead screw 80. The stop portion 360 of the second lead screw 80 may have a larger diameter than an outer diameter of the threaded portion 330 of the second lead screw 80. The connector portion 380 of the second lead screw 80 may have a hole 390 in its center to allow for a connection to a seat cushion 400. By way of example, the connection may be achieved via screws, nails, pegs, bolts, rivets, adhesives, dowels, and/or welding.

Turning now to Figs. 5-6, the adjustment device 10 may be connected to another, similar adjustment device 10. The similar adjustment devices 10 may be longitudinally distal, parallel, and coplanar to one another. While two adjustment devices 10 are mentioned, it may be possible to incorporate fewer or more adjustment devices 10 depending on the needs of the application.

As schematically depicted in Figs. 5-6, the at least one drive shaft 100 may extend perpendicular to the longitudinal axis 210. The device may comprise multiple drive shafts 100. The drive shafts 100 may be connected with the worm gears 60 in a way that allows the worm gears 60 to rotate as the drive shafts 100 rotate. In one example, the drive shafts 100 may fit within the worm gears 60, such as keyed thereto. The drive shafts 100 may have a cross section of any shape, so long as the shape matches the shape of a cut-out center portion of the worm gears 60. The drive shafts 100 may be welded to the worm gear 60 or connected with mechanical fasteners, thus obviating the need for a specific shape.

As schematically depicted in Figs. 5-6, the motor 90 may be employed to rotate the drive shafts 100. The motor 90 may be located between the two adjustment devices 10, but by way of example, the motor 90 may be located closer to one of the similar adjustment devices 10 than an opposite adjustment device 10. The motor 90 may have an opening 410 on both sides of its longitudinal center that is adapted to receive the drive shafts 100.

As schematically depicted in Figs. 5-6, the drive shaft 100 and motor 90 may be at least partially enclosed by the motor housing unit 110. The motor housing unit 110, also known as a cross-bridge, may prevent the motor 90 from rotating about the drive shaft 100. The motor housing unit 110 may span from one gear housing unit 40 to another gear housing unit 40, thus providing a rigid connection between the adjustment devices 10. The motor housing unit 110 may fully enclose the motor 90 and the drive shaft 100 or it may enclose only a portion of each. The motor housing unit 110 may comprise two end portions 430, and each end portion 430 may comprise two connector portions 440. The connector portions 440 of the motor housing unit 110 may be adapted to receive screws, nails, bolts, rivets, adhesives, pegs, dowels, and/or a weld in a way that allows for the connection of the motor housing unit 110 to each gear housing unit 40. The adjustment devices 10, drive shaft 100, motor 90, and motor housing unit 110 may comprise an adjustment system 450.

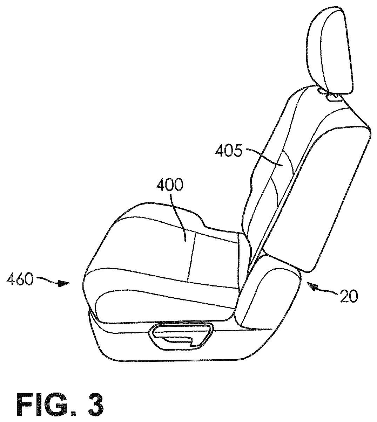

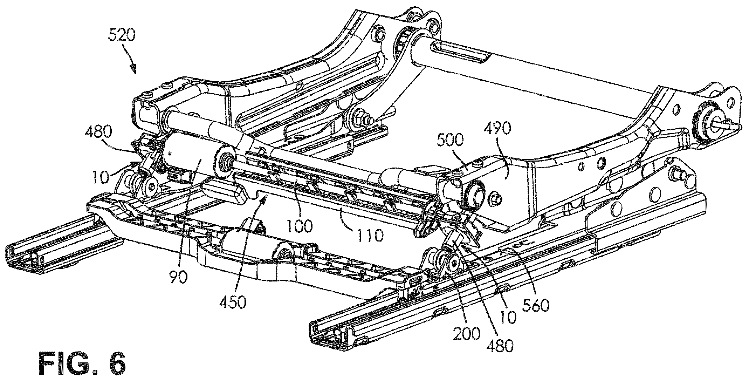

Fig. 6 shows a possible application for the adjustment device 10. As schematically depicted in Fig. 3, the adjustment device 10 may be placed in a vehicle seat 20, in particular under the vehicle seat 20, to adjust a front end 460 of a vehicle seat 20. The connector portions 170 of the first lead screws 30 may be connected to opposite sides of the frame 490 of the seat cushion 400 while the connector portions 380 of the second lead screws 80 may be connected to opposite sides of the fixed seat base 200. The connections of the first lead screws 30 to the fixed seat base 200 may be pivotal connections to allow the adjustment device 10 to selectively pivot with respect to the fixed seat base. By way of example, the connections may be via screws, nails, bolts, rivets, adhesives, pegs, and/or dowels. As schematically depicted in Figs. 5 and 6, some applications may require a sleeve 480 to be placed over the second lead screws 80 to connect the second lead screws 80 to the seat cushion 400.

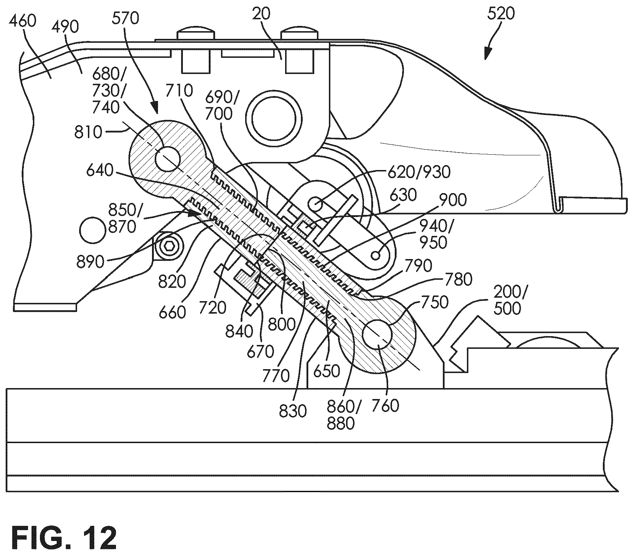

Turning now to Figs. 6 and 7, the adjustment device(s) 10 may assume a compact position 520. In the compact position 520, the second end portion 180 of the first lead screw 30 may be located adjacent to or in contact with the bottom portion 370 of the stop portion 360 of the second lead screw 80. In this position, an end portion 530 of the non-threaded outer portion 250 of the connector 70 may be located adjacent to or contact the bottom surface 160 of the stop portion 140 of the first lead screw 30. In other words, the entirety of the threaded portion 120 of the first lead screw 30 may be enclosed within the connector 70, and the entirety of the threaded portion 310 of the outer portion 270 of the connector 70 may be enclosed by the second lead screw 80 when in the compact position 520. In the compact position 520, the distance between the connector portion 170 of the first lead screw 30 and the connector portion 380 of the second lead screw 80 may be between approximately 70mm and approximately 110mm. In the compact position 520, the fixed seat base 200 and the frame 490 of the seat cushion 400 may be generally parallel to one another, as schematically depicted in Fig. 12. In other words, in the compact position 520, the frame 490 of the seat cushion 400 may be located directly above an upper surface 500 of the fixed seat base 200.

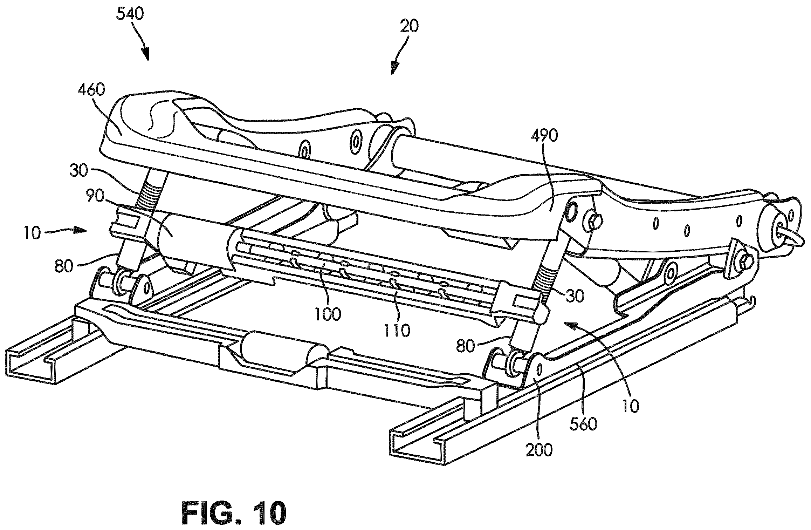

As schematically depicted in Fig. 10, it may be desirable to adjust the front end 460 of the vehicle seat 20 to pivot away from the fixed seat base 200. To achieve such a result, the motor 90 may be engaged to turn the drive shaft 100 in one direction, which may in turn rotate the worm gears 60 in a direction. The worm gears 60 may then rotate the drive gears 50 in a direction, which may then rotate the connectors 70 in a direction. Upon rotation of the connectors 70, due to the opposite nature of the threads 280, 310, the first lead screws 30 may begin to extend out of, and away from, the connectors 70. At the same time, also due to the opposite nature of the threads 280, 310, the connectors 70 may begin to extend away from the second lead screws 80. The movement of the first lead screws 30 and the connectors 70 away from the second lead screw 80 may elongate the adjustment devices 10. The elongation of the adjustment devices 10 may create a force on the seat cushion 400, which may cause the front end 460 of the vehicle seat 20 to pivot away from the upper surface of the fixed seat frame 500, as desired.

As schematically depicted in Figs. 8-10, the adjustment devices 10 may extend until they reach a fully extended position 540. In the fully extended position 540, the connector portions 170, 380 of the first lead screws 30 and the second lead screws 80, respectively, may be between approximately 135mm to approximately 175mm away from one another. In this position 540, the front portion 460 of the vehicle seat 20 may be pivoted between approximately 8 degrees to approximately 22 degrees away from the fixed seat base 200 and may achieve a vertical displacement of between approximately 60mm to approximately 140mm.

To prevent the adjustment devices 10 from over-extending, a stop mechanism 510 may be employed on at least one of the adjustment devices 10. The stop mechanism 510 may be any that prevents the first lead screw 30 from extending completely out of the connector 70, but as schematically depicted in Figs 7-9, the stop mechanism 510 may be a stop ring 510 on the first lead screw 30. The stop ring 510 may be attached to the second end 180 of the first lead screw 30. This attachment may be achieved by any means necessary to secure the stop ring 510 to the first lead screw 30, but by way of example, the stop ring 510 may be welded, glued, threaded, or melted on to the first lead screw 30. The stop ring 510 may have a larger diameter than the diameter of the threaded portion 280 of the inner portion 260 of the connector 70. In other words, in a fully extended position 540, the stop ring 510 may contact the threaded portion 280 of the inner portion 260 of the connector 70 such that the first lead screw 30 cannot extend out of the connector 70.

Between the compact position 520 and fully extended position 540, there may be an intermediate position 550, as schematically depicted in Fig. 8. In the intermediate position 550, the connector portions 170 of the first lead screw 30 and the second lead screw 80 may be between approximately 100mm to approximately 140mm away from one another.

It may further be desired to adjust the seat cushion 400 to pivot towards the fixed seat base 200 from an extended position 540, 550. In such a case, the motor 90 may be engaged to rotate the drive shaft 100 in the opposite direction as previously described. Upon rotation of the drive shaft 100, the worm gears 60 may rotate in the opposite direction as previously described, which may rotate the drive gears 50 in the opposite direction as previously described. In turn, the connectors 70 may rotate in the opposite direction as previously described, which may then cause the first lead screws 30 to move into the connectors at the same time that the connectors 70 move toward the second lead screws 80 until the motor 90 is disengaged or the compact position 520 is reached. The first lead screw 30 may be connected to a slide 560. The slide 560 may slide along the fixed seat base 200 as needed to accommodate the movement of the adjustment device 10.

In some applications, the force exerted on the seat cushion 400 may exert a force on the adjustment devices 10 themselves. As such, a clear advantage of this design is that the parts may be connected in such a way that may focus the force on the first lead screw 30, the connector 70, and the second lead screw 80, rather than on the motor 90 or drive shaft 100.

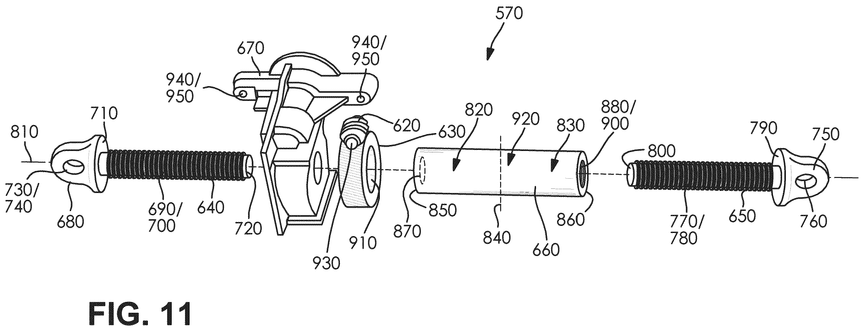

As schematically shown in Figs. 11-14, an adjustment device 570 may be used, alone or in combination with, another adjustment device 570 to comprise a mechanism 580 to adjust the frame 490 of the seat cushion 400 relative to the fixed seat base 200. The device 570 may comprise a motor 590, at least one drive shaft 600, a motor housing unit 610, a worm 620, also known as a worm gear 620, a worm wheel 630, also known as a drive gear 630, a first spindle 640, also known as a first lead screw 640, a second spindle 650, also known as a second lead screw 650, a rotating sleeve 660, also known as a connector 660, and a worm housing unit 670, also known as a gear housing unit 670.

Turning now to Fig. 11, the first spindle 640 may comprise an attachment portion 680 (also known as a connector portion 680), a threaded portion 690, a stop portion 710, and an end portion 720. The attachment portion 680 may have a cut-out center 730 with a hole 740 that allows the first spindle 640 to be pivotably attached to the seat cushion 400. By way of example, the connection may be achieved via screws, nails, pegs, bolts, rivets, adhesives, and/or dowels. The threaded portion 690 of the first spindle 640 may be on an outer surface of the first spindle 640 and may have directionally oriented threads 700. By way of example, the threads 700 may be left-handed threads or right-handed threads. The threaded portion 690 of the first spindle 640 may have an outer diameter. The stop portion 710 of the first spindle 640 may be unthreaded, with a larger outer diameter than the outer diameter of the threaded portion 690 of the first spindle 640. The end portion 720 of the first spindle 640 may be located at an end opposite the attachment portion 680 of the first spindle 640.

As schematically depicted in Fig. 11, the second spindle 650 may comprise an attachment portion 750 (also known as a connector portion 750), a threaded portion 770, a stop portion 790, and an end portion 800. The attachment portion 750 may have a cut-out center 760 that allows the second spindle 650 to be attached to the seat cushion 400. By way of example, the connection may be achieved via screws, nails, pegs, bolts, rivets, adhesives, and/or dowels. The threaded portion 770 of the second spindle 650 may be on an outer surface of the second spindle 650 and may have directionally oriented threads 780. The threaded portion 770 of the second spindle 650 may have an outer diameter. The stop portion 790 of the second spindle 650 may be unthreaded, with a larger outer diameter than the outer diameter of the threaded portion 770 of the second spindle 650. The end portion 800 of the second spindle 650 may be located at an end opposite the attachment portion 750 of the second spindle 650. The first spindle 640 and the second spindle 650 may be generally of the same length and diameter. The first spindle 640 and the second spindle 650 may also be located about a longitudinal axis 810.

As schematically depicted in Fig. 11 the rotating sleeve 660 may be generally cylindrical, with an outer diameter, and with a first end portion 820 and a second end portion 830 that may be separated by a midline 840 in a way that provides that the first end portion 820 and the second end portion 830 may be generally equal in length. While a generally equal length first end portion 820 and second end portion 830 are mentioned, the first end portion 820 may be longer than the second end portion 830 or the second end portion 830 may be longer than the first end portion 820. The first end portion 820 and the second end portion 830 may each have a broad side 850, 860. On the broad side 850 of the first end portion 820, there may be a first spindle receptor portion 870. On the broad side 860 of the second end portion 830, there may be a second spindle receptor portion 880. The first spindle receptor portion 870 may extend longitudinally into the rotating sleeve 660 from the first broad side 850 to the midline 840. The second spindle receptor portion 880 may extend longitudinally into the rotating sleeve 660 from the second broad side 860 to the midline 840. The first spindle receptor portion 870 may have a generally constant outer diameter and the second spindle receptor portion 880 may have a generally constant outer diameter. The outer diameter of the first spindle receptor portion 870 and the outer diameter of the second spindle receptor portion 880 may be generally equal. The outer diameter of the first spindle receptor portion 870 may be larger than the outer diameter of the threaded portion 690 of the first spindle 640. The outer diameter of the second spindle receptor portion 880 may be larger than the outer diameter of the threaded portion 770 of the second spindle 650.

As schematically depicted in Fig. 11-13, the first spindle receptor portion 870 may be threaded in a way that allows for a threaded engagement between the threaded portion 690 of the first spindle 640 and the first spindle receptor portion 870. By way of example, if the threads 700 on the threaded portion 690 of the first spindle 640 is a left-handed thread, the first spindle receptor portion 870 may be adapted to receive a left-handed thread. Similarly, if the threads 700 on the threaded portion 690 of the first spindle 640 are right-handed threads, the first spindle receptor portion 870 may be adapted to receive right-handed threads.

As schematically depicted in Figs. 11-13, the second spindle receptor portion 880 may be threaded in a way that allows for a threaded engagement between the threaded portion 770 of the second spindle 650 and the second spindle receptor portion 880. By way of example, if the threads 780 on the threaded portion 770 of the second spindle 650 is a left-handed thread, the second spindle receptor portion 880 may be adapted to receive a left-handed thread. Similarly, if the threads 780 on the threaded portion 770 of the second spindle 650 are right-handed threads, the second spindle receptor portion 880 may be adapted to receive right-handed threads.

As schematically depicted in Fig. 11-13, the worm wheel 630 may have an inner diameter 910 that may be connected to the outer diameter 920 of the rotating sleeve 660. The worm wheel 630 may be connected to the rotating sleeve 660 at the midline 840 of the rotating sleeve 660 in a way that the worm wheel 630 surrounds at least a portion of the rotating sleeve 660. The connection may be any that ensures that when the worm wheel 630 is rotated, the rotating sleeve 660 is rotated. By way of example, the connection may be achieved by molding and/or welding, and/or by employing screws, nails, pegs, bolts, rivets, adhesives, and/or dowels. The worm wheel 630 may be adapted to interact with the worm 620.

As schematically depicted in Fig. 12-13 the worm 620 may be positioned in contact with the worm wheel 630 in a way that allows rotational motion of the worm 620 about an axis that is perpendicular to the longitudinal axis 810 to be converted to rotational motion of the worm wheel 630 about the longitudinal axis 810. The worm 620 may have a cut-out center portion 930 to receive the drive shaft 600. The cut-out center portion 930 may be of any shape that can secure the drive shaft 600 in a way that ensures the worm 620 may rotate when the drive shaft 600 rotates. The drive shaft 600 may be welded to the worm 620, thus obviating the need for a cut-out center 930.

As schematically depicted in Fig. 12-13 the worm housing unit 670 may surround at least a portion of the worm 620, at least a portion of the worm wheel 630, and at least a portion of the rotating sleeve 660. The worm housing unit 670 may support the worm 620, worm wheel 630, and/or the rotating sleeve 660 in a way that will not hinder the rotation of any of the worm 620, worm wheel 630, and/or the rotating sleeve 660. The worm housing unit 670 may comprise at least one connecting portion 940. This at least one connecting portion 940 may have an opening 950 that allows the worm housing unit 670 to be connected to the motor housing unit 610. The connection may be achieved in any way that prevents rotation of the worm housing unit 670 relative to the motor housing unit 610, but by way of example, the connection may be achieved by screws, nails, pegs, bolts, rivets, adhesives, dowels, and/or welding.

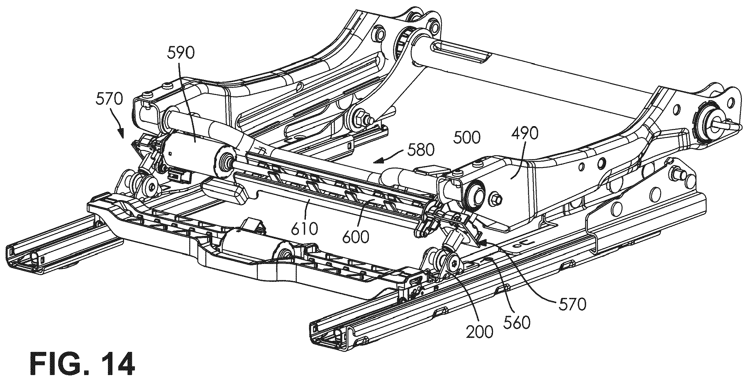

Turning now to Figs. 12 and 14, the front portion 460 of the vehicle seat 20 may be in an initial position 520, also known as a compact position 520. In the initial position 520, the frame 490 of the seat cushion 400 is directly above and generally parallel to the fixed seat base 200, and the end portion 720 of the first spindle 640 is adjacent to, or in contact with, the end portion 800 of the second spindle 650. Once the motor 590 is engaged, the motor 590 may rotate the at least one drive shaft 600, which may in turn rotate the worm 620. The worm 620 may then rotate the worm wheel 630, which may rotate the rotating sleeve 660. Upon rotation of the rotating sleeve 660, the threads 700 on the first spindle 640 may interact with the threads 890 of the first spindle receptor portion 870. At the same time, the threads 780 on the second spindle 650 may interact with the threads 900 of the second spindle receptor portion 880. This simultaneous interaction may force the first spindle 640 to move out of the first spindle receptor portion 640 at the same time that the rotating sleeve 660 moves away from the second spindle 650. The movement of the first spindle 640 and the rotating sleeve 660 away from one the second spindle 650, which may in turn cause the vehicle seat 20 to pivot away from the fixed seat base 200.

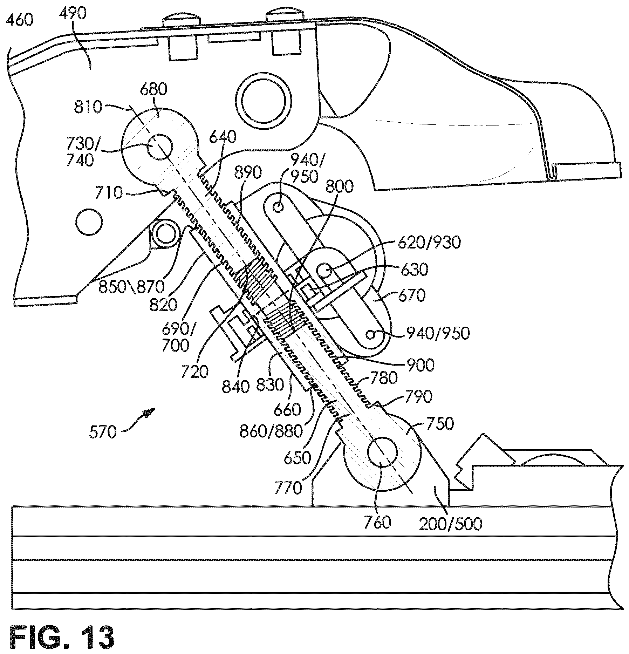

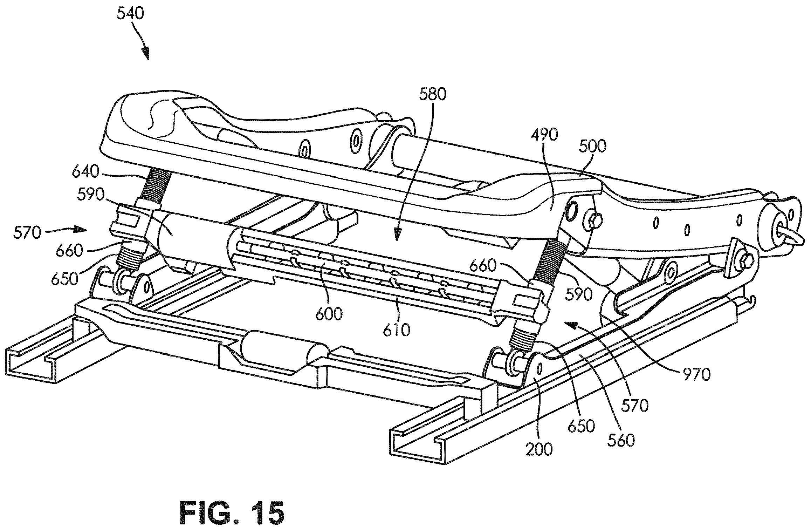

Turning now to Fig. 13 and 15, the first spindle 640 and the rotating sleeve 660 may continue to move away from the second spindle 650 until the device 570 reaches a final position 540, also known as a fully extended position 540. In the final position 540, the frame 490 of the seat cushion 400 may have pivoted away from the fixed seat base 200 by a maximum pivot angle 970. The maximum pivot angle may be between approximately 8 degrees and approximately 22 degrees. While a final position 540 is mentioned, the adjustment device 570 may stop actuating the seat cushion 400 at a middle position 550, also known as an intermediate position 550, between the initial position 520 and final position 540. The middle position 550 may be any position between the final position 540 and the initial position 520.

Once this pivot angle is reached, it may be desirable to pivot the frame 490 of the seat cushion 400 towards the fixed seat base 200. Thus, the motor 590 may rotate the drive shaft 600 in an opposite direction as previously stated, which may in turn rotate the worm 620 and worm wheel 630 in an opposite direction as previously stated. Upon this rotation, the rotating sleeve 660 may rotate in an opposite direction as previously stated, which may cause the first spindle 640 to move into the rotating sleeve 660 and the rotating sleeve 660 to move towards the second spindle 650, thus allowing the seat cushion 400 to pivot towards the fixed seat base 200 and reenter the middle position 550. This rotation may continue until the initial position 520 is reached once again. While an initial position 520 is mentioned, the adjustment device 570 may stop actuating the seat cushion 400 at any middle position 550. The first spindle 640 may be connected to the slide 560. The slide 560 may slide along the fixed seat base 200 to accommodate movement of the adjustment device 570.

In accordance with the provisions of the patent statutes, the present device and/or method has been described in what is considered to represent its preferred embodiments. However, it should be noted that the present device and/or method can be practiced otherwise than as specifically illustrated and described without departing from its spirit or scope.

### List of References

- 10, 570: adjustment device
- 450: adjustment system
- 20: vehicle seat
- 30, 640: first lead screw
- 40, 670: gear housing unit
- 50, 630: drive gear
- 60, 620: worm gear
- 70, 660: connector/connector screw
- 80, 650: second lead screw
- 90,590: motor
- 100, 600: drive shaft
- 110, 610: motor housing unit
- 140, 360, 710, 790: stop portion
- 150, 820: first end portion
- 160, 370: bottom surface
- 180, 830: second end/second end portion
- 190, 390, 740: hole
- 200: fixed seat base/vehicle seat base
- 210, 810: longitudinal axis
- 230, 930: center portion/cut-out center portion
- 240: unthreaded inner portion
- 240, 260, 330: inner portion
- 250, 350: unthreaded portion/unthreaded outer portion
- 270, 310: outer portion
- 300: non-threaded portion
- 330: threaded inner portion
- 370: bottom portion
- 400: seat cushion/cushion
- 410, 950: opening
- 430, 530, 720, 800: end portion
- 460: front portion/front end
- 490: frame/seat cushion frame
- 500: fixed seat frame/upper surface
- 510: stop mechanism/stop ring
- 520: compact position/initial position
- 540, 550: position/final position
- 550: middle position/intermediate position
- 560: slide
- 580: mechanism
- 620: worm/worm gear
- 630: worm wheel/drive gear
- 640, 870: first spindle/first spindle receptor portion
- 650: second spindle
- 660: rotating sleeve
- 670: worm housing unit
- 680, 750: attachment portion
- 730, 760, 930: cut-out center
- 840: midline
- 850: broad side/first broad side
- 860: broad side/second broad side
- 880: second spindle receptor portion
- 910: inner diameter
- 920: outer diameter
- 960: vehicle

## Claims

1. An adjustment device (10, 570) for a vehicle seat (20), comprising:
a first lead screw (30, 640),
a second lead screw (80, 650), and
a connector (70, 660);
wherein a first portion of the connector (70, 660) comprises threads configured to receive threads from the first lead screw (30, 640);
wherein a second portion of the connector (70, 660) comprises threads configured to receive threads from the second lead screw (80, 650).

2. The adjustment device (10, 570) of claim 1,
wherein the threads on the first portion of the connector (70, 660) and the threads on the second portion of the connector (70, 660) are oriented in a different direction than one another such that the connector (70, 660) and the first lead screw (30, 640) are configured to simultaneously move away from the second lead screw (80, 650) upon rotation of the connector (70, 660).

3. The adjustment device (10, 570) of claim 1 or 2,
wherein the threads on the first lead screw (30, 640) and the threads on the second lead screw (80, 650) are oriented in a different direction than one another such that rotation of the connector (70, 660) forces the connector (70, 660) to move away from or towards the second lead screw (80, 650) and the first lead screw (30, 640) away from or towards the connector (70, 660) and the second lead screw (80, 650).

4. The adjustment device (10, 570) of any one of the preceding claims,
wherein the connector (70, 660) is configured to rotate relative to the first lead screw (30, 640) and the second lead screw (80, 650).

5. The adjustment device (10, 570) of any one of the preceding claims,
wherein the threads of the connector (70, 660) are configured such that rotation of the connector drives translation of the first lead screw (30, 640) and the connector (70, 660) relative to the second lead screw (80, 650).

6. The adjustment device (10, 570) of any one of the preceding claims,
further comprising a motor (90, 590), a drive shaft (100, 600), a worm gear (60, 620), and a drive gear (50, 630); wherein the drive gear (50, 630) is directly connected to the connector (70, 660) and is connected to the motor (90, 590) through the worm gear (60, 620) and drive shaft (100, 600) such that the motor can rotate the connector (70, 660).

7. The adjustment device (10, 570) of any one of the preceding claims,
wherein the first lead screw (30, 640) comprises a connector portion configured for attachment to a seat cushion (400), wherein the second lead screw (80, 650) comprises a connector portion configured for attachment to a seat base; wherein a distance between the connector portion of the first lead screw (30, 640) and the connector portion of the second lead screw is increased by rotation of the connector (70, 660).

8. The adjustment device (10, 570) of any one of the preceding claims,
wherein a threaded portion of the first lead screw (30, 640) comprises threads that are oriented in a different direction than threads on a threaded portion of the second lead screw (80, 650).

9. The adjustment device (10, 570) of any one of the preceding claims, wherein the connector (70, 660) comprises a connecting screw (70); wherein the threads on the second lead screw (80, 650) are configured to receive threads on an outer portion of the connecting screw (70); wherein threads on an inner portion of the connecting screw (70) are configured to receive the threads on the first lead screw (30, 640).

10. The adjustment device (10, 570) of claim 9 further comprising a drive gear (50, 630); wherein the drive gear is coupled to a non-threaded portion of the connecting screw.

11. The adjustment device (10, 570) of any one of the preceding claims,
wherein the connector (70, 660) is hollow and comprises a threaded inner diameter; wherein the threaded inner diameter of the connector (70, 660) is configured to receive a threaded portion of the first lead screw (30, 640) and a threaded portion of the second lead screw.

12. The adjustment device (10, 570) of any one of the preceding claims,
wherein a stop portion of the first lead screw (30, 640) and a stop portion of the second lead screw (80, 650) each comprise a larger outer diameter than the threaded portion of the first lead screw (30, 640) and the second lead screw (80, 650) and are each configured to make selective contact with opposite end portions of the connector (70, 660).

13. The adjustment device (10, 570) of any one of the preceding claims,
wherein the drive gear (50, 630) comprises an inner diameter directly connected to an outer diameter of the connector (70, 660).

14. The adjustment device (10, 570) of any one of the preceding claims,
further comprising a worm gear (60, 620) with threads that are configured to interact with threads on a drive gear (50, 630) such that rotation of the worm gear (60, 620) rotates the drive gear (50, 630).

15. A seat (20) comprising a cushion (400), a base (200), and an adjustment device (10, 570) according to anyone of the preceding claims, wherein the adjustment device (10, 570) is directly connected to the cushion (400) and the base (200), such that the adjustment device (10, 570) is configured to move the cushion (400) relative to the base (200).
